# FASCICULE DE BREVET EUROPEEN

(11) **EP 0 568 406 B1**
(45) Date de publication et mention de la délivrance du brevet: **18.10.1995**
(21) Numéro de dépôt: 93400936.6
(22) Date de dépôt: 09.04.1993
(51) Int. Cl.: B62D 25/20

(54) **Longeron latéral de châssis assemblé au plancher d'un véhicule automobile**
Zusammengesetzter seitlicher Längsträger am Boden eines Kraftfahrzeuges
Assembled side member at the floor of a motor vehicle

(30) Priorité: 28.04.1992 FR 9205211
(43) Date de publication de la demande: 03.11.1993
(73) Titulaire: REGIE NATIONALE DES USINES RENAULT S.A., 92109 Boulogne Billancourt (FR)
(72) Inventeur: Richoux, Jean, F-78200 Mantes La Jolie (FR); Gros, Christian, F-78400 Chatou (FR); Hetier, Martial, F-78000 Versailles (FR)
(74) Mandataire: Ernst-Schonberg, Michel

(56) Documents cités:
- FR-A- 2 597 056

## Description

L'invention concerne un longeron latéral de châssis assemblé au plancher d'un véhicule automobile, constitué par une poutre creuse qui supporte des éléments du châssis et le plancher dudit véhicule.

La publication FR-A-2597056 décrit un longeron latéral constitué par un profil extrudé en aluminium dont la paroi extérieure porte des glissières de positionnement des traverses du châssis en liaison avec le longeron latéral opposé.

La publication FR-A-1026800 décrit un longeron latéral dont une paroi est constituée par le plancher du véhicule tandis que la paroi opposée du longeron porte une glissière de montage d'une traverse du châssis destinée à porter les sièges du véhicule.

Les structures connues des longerons sont inadaptées au montage et à la fixation de planchers séparables dont la structure particulières doit être raccordée à la base des longerons.

L'invention a donc pour objet un longeron assemblé à une structure de plancher dans le but d'abaisser le centre de gravité du véhicule et de favoriser, sans perturbations, l'écoulement de l'air au cours de l'avancement du véhicule.

L'invention a également pour objet un dispositif d'assemblage d'un plancher de véhicule à une structure de longeron dans le but de favoriser le démontage et l'interchangeabilité des planchers de structures différentes.

Selon l'invention la poutre qui constitue le longeron possède une rainure de montage et d'immobilisation d'un organe de retenue du plancher.

D'autres caractéristiques et avantages du longeron apparaîtront à la lecture de la description d'exemples de réalisation de celui-ci en référence au dessin annexé dans lequel :
- la figure 1 est une représentation perspective d'une ossature d'une carrosserie de véhicule automobile,
- les figures 2, 3, 4, 5 représentent des sections types de quatre variantes de réalisation d'un longeron latéral assemblé au plancher du véhicule.
- la figure 6 représente une section caractéristique du plancher représenté à la figure 2 avant son assemblage avec le longeron.

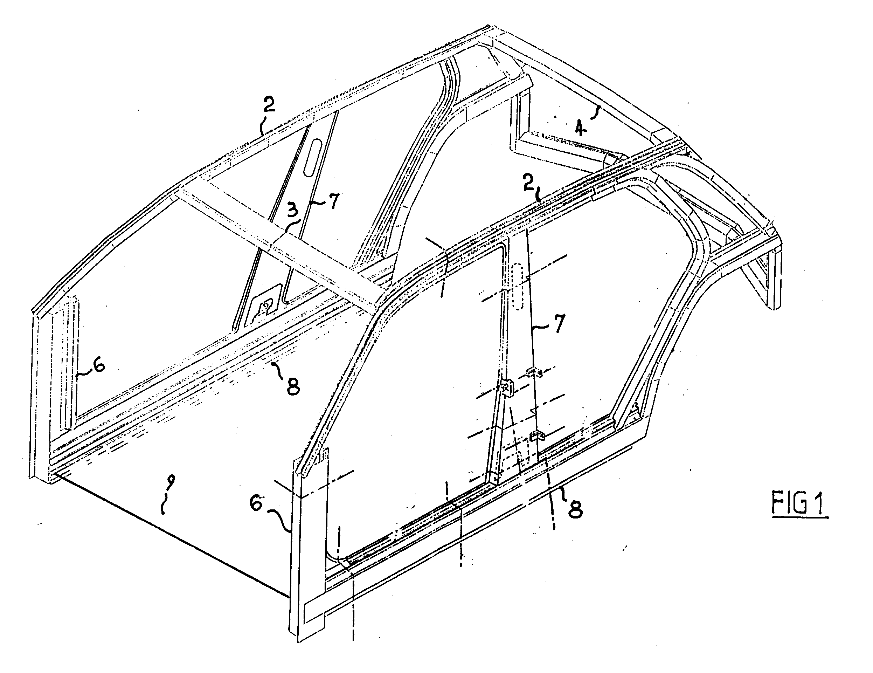

L'examen de l'ossature représentée à la figure 1 montre que celle-ci est constituée principalement par deux membrures longitudinales 2, entretoisées par des traverses 3, 4 respectivement situées à l'avant et à l'arrière d'un cadre support d'un panneau non représenté du pavillon.

Les membrures 2 sont supportées par des montants avant 6, et médians 7 du châssis respectivement raccordés à deux longerons latéraux 8 porteurs d'une structure de plancher 9 et d'éléments du châssis non représentés.

Le longeron 8 est constitué par une poutre creuse 10 dont les parties fonctionnelles constituées par une rainure 11 de montage d'un joint d'étanchéité non représenté et par des nervures d'accrochage 12, 13 d'une pièce d'habillage extérieure 14.

On désignera plus simplement sur les dessins et dans la suite de la description les parties caractéristiques du longeron 8 par les mêmes références.

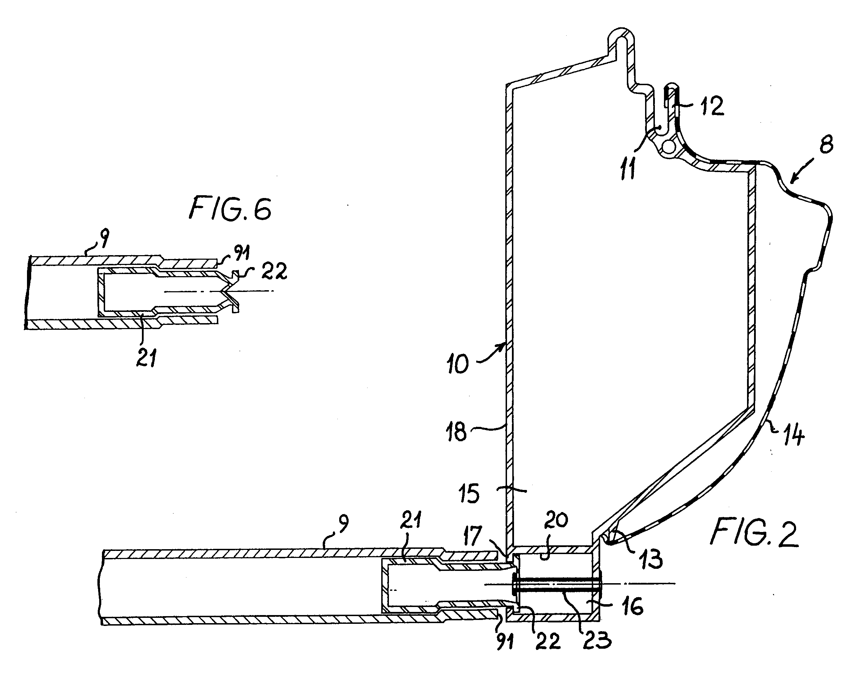

Les modes de réalisation du longeron et de sa liaison avec le plancher apparaissent plus en détail sur les figures 2 à 5.

La figure 2 illustre une section de longeron comportant un alvéole supérieur 15 et un alvéole inférieur 16 muni d'une paroi de fond 17. La paroi de fond 17 de l'alvéole 16 qui prolonge la face latérale 18 du longeron 8 constitue la paroi d'une rainure 20 de montage d'un ou de plusieurs organes de retenue 21 du plancher 9.

L'organe de retenue 21 est réalisé sous la forme d'un rail continu ou sous la forme de tronçons élémentaires de même section préassemblés par tout moyen connu avec le plancher 9.

L'extrémité de l'organe de retenue 21 du plancher 9 s'étend transversalement au-delà du bord longitudinal 91 du plancher 9 et porte une bride de fixation expansible 22 sous l'action d'un effort de traction communiqué à titre d'exemple par un rivet 23. L'ensemble constitué par le plancher 9 et par les organes de retenues 21 est d'abord emboîté dans les rainures de montage opposées 20 des longerons 8 et est ensuite longitudinalement immobilisé par les rivets 23.

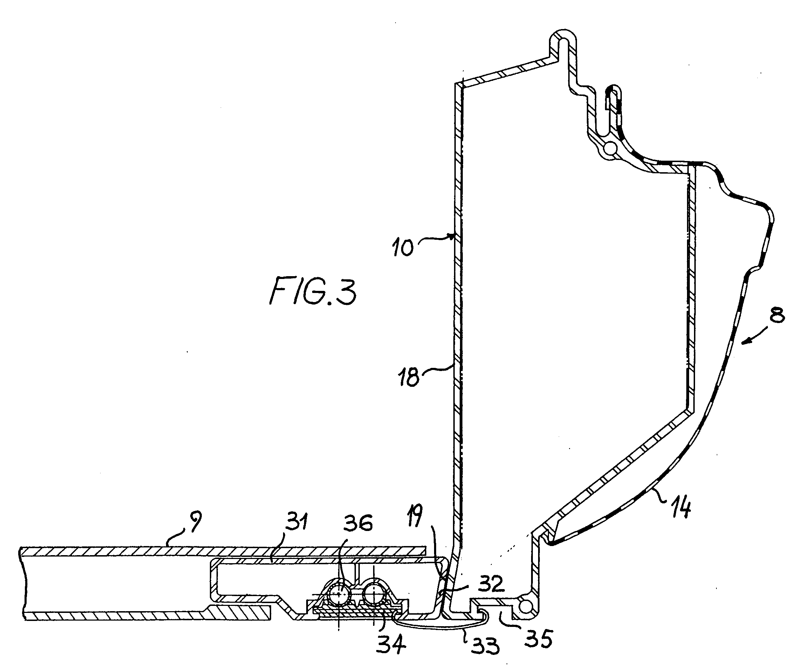

La figure 3 illustre une section de longeron 8 constitué par une poutre creuse 10 dont la face latérale 18 possède une paroi inférieure d'appui 19 inclinée et adjacente à la face d'appui correspondante 32 de l'organe de retenue 31, fixé au plancher 9 ainsi que cela vient d'être dit en référence à la figure 2.

La paroi inférieure d'appui 19 et la face d'appui 32 sont associées par des étriers élastiques de liaison 33 dont les branches sont respectivement engagées dans des rainures 34, 35 de montage portées par l'organe de retenue 32 et par le longeron 8. La rainure 34 portée par l'organe de retenue 31 constitue également un chemin du câblage 36 du véhicule.

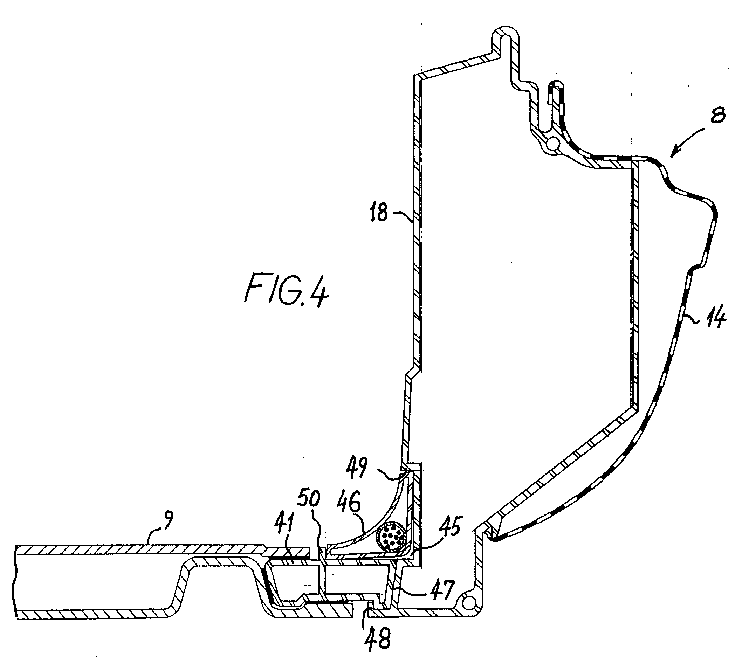

La figure 4 illustre une section de longeron 8 dont la face latérale 18 possède une paroi inférieure munie d'une rainure de montage et d'immobilisation 45 d'un chemin 46 de câblage. Le bord inférieur de la rainure de montage 45 s'étend vers la base du longeron par une face inclinée 47 d'appui de l'organe de retenue 41 préalablement solidarisé avec le plancher 9. La base de la face d'appui 47 se prolonge transversalement vers le plancher 9 par un bord de blocage 48 de l'organe de retenue 41 sous l'effet d'arc-boutement du chemin de câblage 46 au contact d'un épaulement d'appui supérieur 49 de la rainure 45 et d'une nervure d'appui 50 portée par l'organe de retenue 41.

La mise en place du chemin 46 entre le bord 49 et la nervure 50 permet notamment la liaison et l'immobilisation de l'organe de retenue 41 au contact du chemin 46 et du bord de blocage 48.

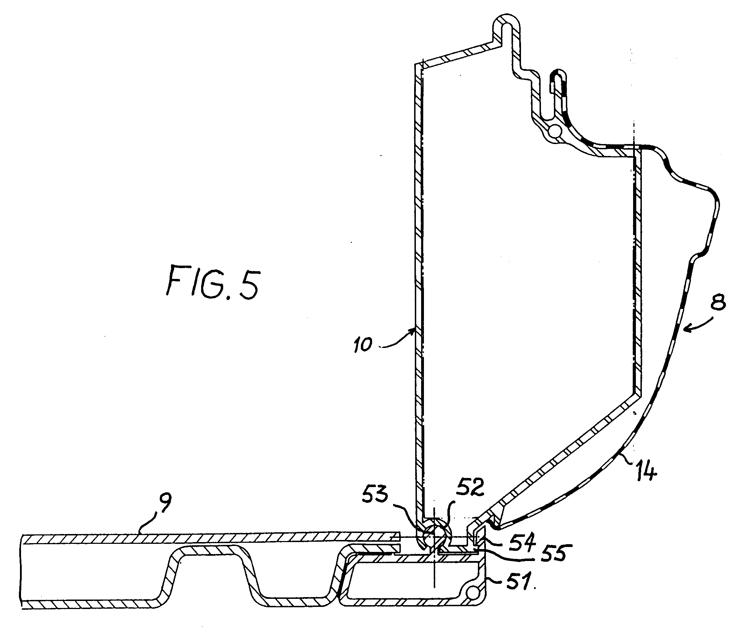

La figure 5 illustre une section du longeron 8 dont la base porte une rainure tubulaire 52 d'une nervure 53 portée par l'organe de retenue 51 du plancher 9. L'organe de retenue 51 est constitué à titre d'exemple par des éléments creux répartis longitudinalement le long de la rainure 52 et portent individuellement un bord d'accrochage 54 au contact d'une nervure 55 portée par la base du longeron 8.

Lors du montage, le plancher 9 possède un bord latéral préalablement encollé et exerce au contact de l'organe de retenue 51 un effort vertical.

Cette manière de procéder permet l'articulation et un déplacement angulaire des divers organes de retenue 51 autour de l'axe de la nervure 53 dans le but de réaliser l'accrochage du bord 54 au contact du longeron 8 sous l'action du poids du plancher.

Selon l'exemple de réalisation précité l'agencement des organes de retenue 51 le long du longeron 8 permet la localisation des supports du cric de levage du véhicule. Ces derniers peuvent être notamment réalisés par des organes tels que 51 façonnés dans un matériau adapté à supporter les efforts nécessaires au levage du véhicule.

## Revendications

1. Longeron latéral de châssis assemblé au plancher d'un véhicule automobile, constitué par une poutre creuse (10) qui supporte des éléments du châssis et le plancher (9) dudit véhicule, caractérisé par le fait que la poutre (10) possède une rainure (20, 35, 45, 52) de montage et d'immobilisation d'un organe de retenue (21, 31, 41, 51) du plancher (9).

2. Longeron selon la revendication 1, caractérisé par le fait que l'organe de retenue (21) du plancher possède une bride de fixation (22) montée dans une rainure (20) de montage porté par le longeron (8).

3. Longeron selon l'une quelconque des revendications 1 ou 2, caractérisé par le fait que l'organe de retenue (21, 31, 41) et le plancher (9) sont préassemblés.

4. Longeron selon l'une quelconque des revendications 1, 3, caractérisé par le fait que l'organe de retenue (31) est transversalement limité par une face d'appui (32) tournée vers une paroi adjacente (19) du longeron (8).

5. Longeron selon la revendication 4, caractérisé par le fait que la face d'appui de l'organe de retenue (31, 41) et la paroi adjacente (19, 47) du longeron (8) sont associées par un moyen de liaison (33, 46).

6. Longeron selon l'une quelconque des revendications 1 à 5, caractérisé par le fait que l'organe de retenue (41) est transversalement limité par une nervure d'appui (50) d'un chemin de câble (46) monté en tension entre ladite nervure d'appui (50) et un épaulement (49) de la rainure (45).

7. Longeron selon la revendication 1, caractérisé par le fait que l'organe de retenue (51), du plancher (9) possède un bord d'accrochage (54) du longeron (8) et une nervure (53) d'articulation dudit organe de retenue (51) sous l'action du poids du plancher.

8. Longeron selon la revendication 7, caractérisé par le fait que l'organe de retenue (51) du plancher (9) supporte l'effort communiqué par un cric de levage.

## Claims

1. A longitudinal chassis side member assembled to the floor of a motor vehicle, formed by a hollow bed (10) which supports elements of the chassis and the floor (9) of said vehicle, characterised in that the bed (10) has a channel (20, 35, 45, 52) for fitting and immobilising a retaining member (21, 31, 41, 51) for the floor (9).

2. A side member according to claim 1 characterised in that the retaining member (21) for the floor has a fixing flange (22) mounted in a mounting channel (20) carried by the side member (8).

3. A side member according to either one of claims 1 and 2 characterised in that the retaining member (21, 31, 41) and the floor (9) are pre-assembled.

4. A side member according to either one of claims 1 and 3 characterised in that the retaining member (31) is transversely limited by a support face (32) which faces towards an adjacent wall (19) of the side member (8).

5. A side member according to claim 4 characterised in that the support face of the retaining member (31, 41) and the adjacent wall (19, 47) of the side member (8) are associated by a connecting means (33, 46).

6. A side member according to any one of claims 1 to 5 characterised in that the retaining member (41) is transversely limited by a support rib (50) for a cable conduit (46) mounted in a condition of tension between said support rib (50) and a shoulder (49) of the channel (45).

7. A side member according to claim 1 characterised in that the retaining member (51) for the floor (9) has an edge (54) for hooking engagement of the side member (8) and a rib (53) for pivotal mounting of said retaining member (51) under the action of the weight of the floor.

8. A side member according to claim 7 characterised in that the retaining member (51) for the floor (9) carries the force communicated by a lifting jack.

## Patentansprüche

1. Seitlicher Karosserielängsträger für den Zusammenbau mit dem Boden eines Kraftfahrzeuges, bestehend aus einem Hohlbalken (10), welcher Karosserieteile und den Boden (9) des Fahrzeugs trägt, dadurch gekennzeichnet, daß der Balken (10) eine Montage- und Feststellnut (20, 35, 45, 52) für ein Halteteil (21, 31, 41, 51) des Bodens (9) trägt.

2. Längsträger nach Anspruch 1, dadurch gekennzeichnet, daß das Halteteil (21) des Bodens einen Befestigungsflansch (22) aufweist, der in eine Montagenut (20) eingreift, welche vom Längsträger (8) getragen wird.

3. Längsträger nach einem der Ansprüche 1 oder 2, dadurch gekennzeichnet, daß das Halteteil (21, 31, 41) und der Boden (9) vorab zusammengebaut sind.

4. Längsträger nach einem der Ansprüche 1 bis 3, dadurch gekennzeichnet, daß das Halteteil (31) in Querrichtung durch eine der benachbarten Wand (19) des Längsträgers (8) zugewandten Stützfläche (32) begrenzt ist.

5. Längsträger nach Anspruch 4, dadurch gekennzeichnet, daß die Stutzfläche des Halteteils (31, 41) und die benachbarte Wand (19, 47) des Längsträgers (8) durch eine Verbindungsanordnung (33, 46) miteinander verbunden sind.

6. Längsträger nach einem der Ansprüche 1 bis 5, dadurch gekennzeichnet, daß das Halteteil (41) in Querrichtung durch eine Stützrippe (50) eines Kabelkanals (46) begrenzt ist, der im Klemmsitz zwischen der Stützrippe (50) und einer Schulter (49) der Nut (45) angeordnet ist.

7. Längsträger nach Anspruch 1, dadurch gekennzeichnet, daß das Halteteil (51) des Bodens (9) einen unter der Wirkung des Bodengewichtes stehenden Befestigungsrand (54) für den Längsträger (8) und eine Gelenkrippe (53) des Halteteils (51) aufweist.

8. Längsträger nach Anspruch 7, dadurch gekennzeichnet, daß das Halteteil (51) des Bodens (9) die von einem Wagenheber ausgeübte Kraft aufnimmt.
